(19) Europäisches Patentamt
European Patent Office
Office européen des brevets

(11) **EP 4 723 201 A1**

(12) **EUROPEAN PATENT APPLICATION**

(43) Date of publication:
08.04.2026 Bulletin 2026/15

(21) Application number: 25199567.6

(22) Date of filing: 02.09.2025

(51) International Patent Classification (IPC):
*H01M 4/133* (2010.01)   *H01M 4/134* (2010.01)
*H01M 4/36* (2006.01)   *H01M 4/587* (2010.01)
*H01M 4/62* (2006.01)   *H01M 10/0525* (2010.01)

(52) Cooperative Patent Classification (CPC):
H01M 4/133; H01M 4/134; H01M 4/366;
H01M 4/587; H01M 4/625; H01M 10/0525;
H01M 2004/021

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 JP 2024169484

(71) Applicant: Prime Planet Energy & Solutions, Inc.
Chuo-ku, Tokyo 103-0022 (JP)

(72) Inventor: MASUI, Harumi
Tokyo 103-0022 (JP)

(74) Representative: Kuhnen & Wacker
Patent- und Rechtsanwaltsbüro PartG mbB
Prinz-Ludwig-Straße 40A
85354 Freising (DE)

(54) **NEGATIVE ELECTRODE FOR SECONDARY BATTERY AND SECONDARY BATTERY WITH NEGATIVE ELECTRODE**

(57) The negative electrode of the secondary battery of a present disclosure is a negative electrode for secondary battery that includes a negative electrode current collector, and a negative electrode active material layer supported by the negative electrode current collector. The negative electrode active material layer includes a lower layer positioned at a side of the negative electrode current collector and an upper layer positioned at a surface side, the upper layer contains a first graphite particle and a first Si-containing particle, as a negative electrode active material, and the lower layer contains a second graphite particle and a second Si-containing particle, as the negative electrode active material. Then, a mean circularity C1 of the first Si-containing particle is larger than a mean circularity C2 of the second Si-containing particle.

FIG.2

EP 4 723 201 A1

**Description**

BACKGROUND

1. Technical Field

A present disclosure relates to a negative electrode for a secondary battery and the secondary battery in which the negative electrode is used.

2. Background

Recently, a secondary battery is suitably used for a portable power supply of a personal computer, a portable terminal, or the like, a power supply for driving automobiles, such as battery electric vehicle (BEV), hybrid electric vehicle (HEV), and plug-in hybrid electric vehicle (PHEV), or the like.

Regarding a purpose for the power supply for driving automobiles, especially regarding a purpose for the power supply for driving the BEV, from a perspective of extending a driving distance of the vehicle, it is desired to make the secondary battery have a higher capacity. As a negative electrode active material whose capacity is high, a Si-containing particle is known, and it is known, with the Si-containing particle, to be able to make the secondary battery have the higher capacity (see, for example, Japanese Patent Application Publication No. 2019-175851, and Japanese Patent Application Publication No. 2017-092009).

Japanese Patent Application Publication No. 2019-175851 discloses a lithium ion secondary battery that uses a composite particle being configured with a silicon oxide particle as a negative electrode active material, a graphite particle, and a low crystalline carbon material covering at least a part of them and having a mean circularity which is 0.90 to 0.99 so as to enhance a battery capacity and an electrical charge and discharge cycle characteristic.

Japanese Patent Application Publication No. 2017-092009 discloses a lithium ion secondary battery that contains a particle which is a silicon chemical compound particle containing a silicon chemical compound ($SiO_x$: $0.5 \leq x \leq 1.6$) as the negative electrode active material, whose mean circularity is equal to or more than 0.93, and in which an occupancy rate of particles having the mean circularities being equal to or less than 0.85 is equal to or less than 5 % so as to enhance the battery capacity and the cycle characteristic.

However, although the Si-containing particle enhances the capacity of the secondary battery, it has a larger volume change caused by an expansion/contraction when the secondary battery is electrically charged and electrically discharged. Then, in a situation where the Si-containing particle, whose mean circularity is comparatively high, and the graphite particle are used as the negative electrode active material, when an electrical charge and an electrical discharge are repeated on the secondary battery, there is a problem that an excess void is not much and thus an inside stress is increased by a swell of the negative electrode. Thus, regarding the negative electrode that contains the Si-containing particle and the graphite particle, it is demanded to develop the negative electrode whose swell is smaller when the electrical charge and the electrical discharge are repeated on the secondary battery. Incidentally, this swell of the negative electrode represents that a volume of the negative electrode becomes larger than an initial volume on the same electrical charge state (for example, a state closer to a full charge near a SOC being 80%). Further, in a situation where the excess void is not much in the negative electrode active material layer, a liquid flow property is reduced and thus a rapid deterioration of the secondary battery could be caused.

SUMMARY

In view of the above described issue, the present disclosure has an object to provide a negative electrode containing a Si-containing particle and a graphite particle, which is a negative electrode for a secondary battery that implements reducing a swelling degree when the electrical charge and the electrical discharge are repeated on the secondary battery and implements suppressing the rapid deterioration caused by the reduction in the liquid flow property.

A herein disclosed negative electrode is a negative electrode for a secondary battery that includes a negative electrode current collector and a negative electrode active material layer supported by the negative electrode current collector. The negative electrode active material layer includes a lower layer positioned at a side of the negative electrode current collector and an upper layer positioned at a surface side. The upper layer contains a first graphite particle and a first Si-containing particle, as a negative electrode active material. The lower layer contains a second graphite particle and a second Si-containing particle, as the negative electrode active material. Then, a mean circularity C1 of the first Si-containing particle is larger than a mean circularity C2 of the second Si-containing particle.

According to a configuration as described above, in the negative electrode active material layer including a 2-layers structure configured with a surface side and a negative electrode current collector side, the negative electrode active material on the negative electrode active material layer at a surface side is densely packed, and the negative electrode active material on the negative electrode active material layer at the negative electrode current collector side is sparsely packed. Then, the upper layer easily causing a deformation when the electrical charge and the electrical discharge are performed tends to easily follow the expansion/contraction of the negative electrode active material, and thus it is implemented to suppress the negative electrode swell due to an inside stress relief and to make the secondary battery have the higher capacity. While, on the lower layer where the deformation is not easily caused, it is not easy for the negative electrode active material to move and thus it is implemented to suppress the negative electrode swell due to inhibiting a disconnection of an electrically conductive path. Further, on the lower layer, the sparsely packing ability for the negative electrode active material is maintained even after the electrical charge and the electrical discharge are repeated on the secondary battery, and thus it is possible to suppress the rapid deterioration of the secondary battery due to the reduction in the liquid flow property.

In one suitable aspect of the herein disclosed negative electrode, the C1 is equal to or more than 0.9 and not more than 1.0, and the C2 is equal to or more than 0.5 and less than 0.9. By doing this, the negative electrode active material is further densely packed on the upper layer and the negative electrode active material is further sparsely packed on the lower layer, and thus it is possible to suitably implement making the secondary battery have the higher capacity, suppressing the negative electrode swell caused by the electrical charge and discharge, and rapidly deteriorating the secondary battery due to the reduction in the liquid flow property.

In one suitable aspect of the herein disclosed negative electrode, a mean circularity D1 of the first graphite particle is equal to or more than 0.85 and not more than 1.0. By doing this, the negative electrode active material is further densely packed on the upper layer, and thus it is possible to suitably implement making the secondary battery have the higher capacity and suppressing the negative electrode swell caused by the electrical charge and discharge.

In one suitable aspect of the herein disclosed negative electrode, a ratio T1 : T2 of a thickness T1 of the upper layer and a thickness T2 of the lower layer is 10 : 90 to 90 : 10. By doing this, it is possible to implement an aspect in which the negative electrode active material is further densely packed on the upper layer and the negative electrode active material is further sparsely packed on the lower layer, and thus it is possible to suitably implement making the secondary battery have the higher capacity, suppressing the negative electrode swell caused by the electrical charge and discharge, and rapidly deteriorating the secondary battery due to the reduction in the liquid flow property.

In one suitable aspect of the herein disclosed negative electrode, a mass rate N1 of the first Si-containing particle with respect to a total mass of the first graphite particle and the first Si-containing particle on the upper layer is 10 to 60 mass%, and a mass rate N2 of the second Si-containing particle with respect to a total mass of the second graphite particle and the second Si-containing particle on the lower layer is 10 to 60 mass%. By doing this, the negative electrode active material is further densely packed on the upper layer and the negative electrode active material is further sparsely packed on the lower layer, and thus it is possible to suitably implement making the secondary battery have the higher capacity, suppressing the negative electrode swell caused by the electrical charge and discharge, and rapidly deteriorating the secondary battery due to the reduction in the liquid flow property.

The herein disclosed secondary battery is a secondary battery that includes a positive electrode, a negative electrode, and an electrolyte, and the negative electrode is any of the herein disclosed negative electrodes.

According to a configuration as described above, it is possible to implement the secondary battery in which having the higher capacity, suppressing the negative electrode swell due to the electrical charge and discharge, and suppressing the rapid deterioration caused by the reduction in the liquid flow property are implemented.

## BRIEF DESCRIPTION OF THE DRAWINGS

FIG. 1 is a cross section view that schematically shows an example of a negative electrode 60 in accordance with the present embodiment, and is a cross section view that is shown along a thickness direction and a width direction.
FIG. 2 is a schematic cross section view that shows a particle of a negative electrode active material contained in a negative electrode active material layer 64 shown by FIG. 1.
FIG. 3 is a view that schematically shows a configuration of a lithium ion secondary battery constructed with the negative electrode in accordance with one embodiment.
FIG. 4 is a schematic exploded view that shows a configuration of a wound electrode assembly of the lithium ion secondary battery shown by FIG. 3.

## DETAILED DESCRIPTION

Below, a preferred embodiment of a herein disclosed technique would be explained. Incidentally, the matters other than matters particularly mentioned in this description and required for implementing the herein disclosed technique can be grasped as design matters of those skilled in the art based on the related art in the present field. The herein disclosed technique can be executed based on the contents disclosed in the present description and on the technical common sense in the present field. Additionally, in drawings explained by the present description, the members/parts providing the same effect are provided with the same numerals and signs and are explained, and overlapped explanation might be omitted or simplified. Additionally, a dimensional relation (a length, a width, a thickness, and the like) in each drawing does not always reflect the actual dimensional relation. In addition, a wording "A to B" representing a numerical value range means to be equal to or more than A and not more than B and semantically covers a numerical value range being more than A and less than B.

A wording "secondary battery" in the present description is a term denoting electricity storage devices that are capable of repeatedly performing an electrical charge and discharge in response to a movement of a charge carrier between a positive electrode and a negative electrode, and is a concept that semantically covers a so-called storage battery (a chemical battery), such as lithium ion secondary battery and sodium ion secondary battery, and a capacitor (a physical battery), such as lithium ion capacitor (LIC). Below, each of main configuration materials of the secondary battery in accordance with the present disclosure will be described. Incidentally, as configuration materials of the secondary battery not described here, it is possible to use conventionally known ones.

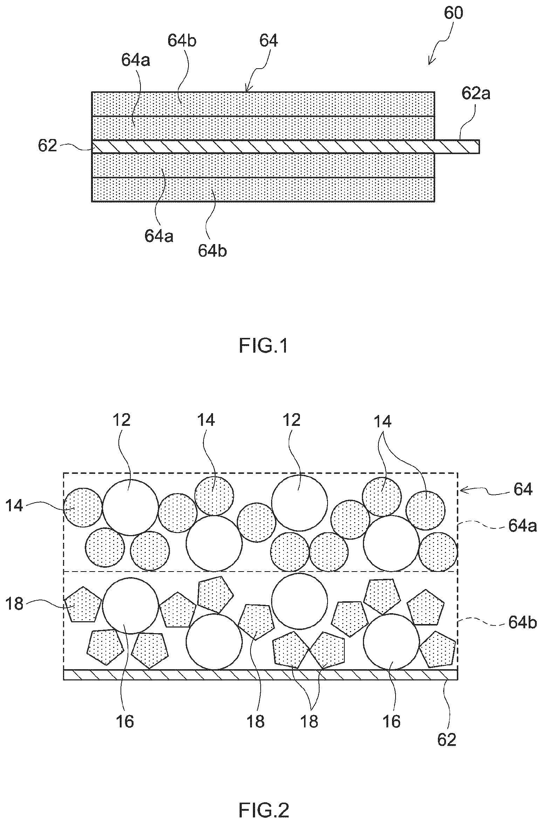

The herein disclosed negative electrode is used for a secondary battery, or suitably used for a lithium ion secondary battery. One embodiment of the herein disclosed negative electrode would be particularly explained, while referring to FIG. 1. FIG. 1 is a cross section view that schematically shows an example of a negative electrode 60 in accordance with the present embodiment, and is a cross section view that is shown along a thickness direction and a width direction. The negative electrode 60 in accordance with the present embodiment shown by FIG. 1 is the negative electrode of the lithium ion secondary battery.

1. Negative electrode

(1) Configuration of negative electrode

As shown in FIG. 1, the negative electrode 60 includes a negative electrode current collector 62 and a negative electrode active material layer 64 that is supported by the negative electrode current collector 62. In other words, the negative electrode 60 includes the negative electrode current collector 62 and the negative electrode active material layer 64 that is provided on the negative electrode current collector 62. The negative electrode active material layer 64 might be provided on only one surface of the negative electrode current collector 62 or might be provided on both surfaces of the negative electrode current collector 62 as shown in FIG. 1. It is preferable that the negative electrode active material layer 64 is provided on both surfaces of the negative electrode current collector 62.

The negative electrode 60 might include a member other than the negative electrode current collector 62 and the negative electrode active material layer 64. For example, on a negative electrode active material layer non-formation part 62a, an insulation layer (not shown in drawings) might be provided that is positioned adjacent to the negative electrode active material layer 64. This insulation layer contains, for example, an inorganic filler having an insulating property, or the like.

As shown in FIG. 1, the negative electrode active material layer non-formation part 62a in which the negative electrode active material layer 64 is not provided might be provided at one of end parts in the width direction of the negative electrode 60. On the negative electrode active material layer non-formation part 62a, the negative electrode current collector 62 is exposed and thus the negative electrode active material layer non-formation part 62a can function as an electrical collector part. However, a configuration for electrically collecting from the negative electrode 60 is not restricted to this.

A shape of the negative electrode current collector 62 is a foil shape (or a sheet shape) in FIG. 1, but it is not restricted by this. The negative electrode current collector 62 might be formed in a rod shape, a plate shape, a mesh shape, or the like. As a material of the negative electrode current collector 62, similarly to a conventional lithium ion secondary battery, it is possible to use a metal having a good electrically conductive property (for example, copper, nickel, titanium, stainless steel, or the like), and the copper is preferable among them. As the negative electrode current collector 62, it is especially preferable to use a copper foil.

A size of the negative electrode current collector 62 is not particularly restricted, and it is good to be suitably decided in accordance with a battery design. In a situation where the copper foil is used as the negative electrode current collector 62, a thickness of it is not particularly restricted, but it might be, for example, equal to or more than 5 $\mu$m and not more than 35 $\mu$m, or preferably equal to or more than 6 $\mu$m and not more than 20 $\mu$m.

As shown in FIG. 1, the negative electrode active material layer 64 has a multilayer structure, and particularly includes a first layer 64a positioned at a surface side of the negative electrode active material layer 64 and a second layer 64b positioned at the negative electrode current collector 62 side. As shown in FIG. 1, the first layer 64a is an upper layer of the negative electrode active material layer 64 and the second layer 64b is a lower layer of the negative electrode active material layer 64. Incidentally, the negative electrode active material layer 64 might include layers, other than the first layer 64a and the second layer 64b, within a range where an effect of the present disclosure is not significantly inhibited. For example, the negative electrode active material layer 64 might include a middle layer between the first layer 64a and the second layer 64b, as components of these layers are mixed in the middle layer.

The negative electrode active material layer 64 contains a negative electrode active material. About this, it is explained with FIG. 2. FIG. 2 is a schematic cross section view that shows a particle of a negative electrode active material contained in the negative electrode active material layer 64 shown by FIG. 1. Incidentally, FIG. 2 is a schematic view, and thus a number of the particles, a distribution of the particles, or the like, is not restricted to one shown by FIG. 2.

As the negative electrode active material, the first layer 64a contains a first graphite particle 12 and a first Si-containing particle 14, as the negative electrode active material. The second layer 64b contains a second graphite particle 16 and a second Si-containing particle 18, as the negative electrode active material. Thus, in the first layer 64a, as the negative electrode active material, at least the first graphite particle 12 and the first Si-containing particle 14 are used, and in the second layer 64b, as the negative electrode active material, at least the second graphite particle 16 and the second Si-containing particle 18 are used. The Si-containing particle has the large volume change caused by the expansion/contraction in response to the electrical charge and discharge, but when it is used together with the graphite particle, it is possible to suppress a disconnection of an electrically conductive path caused by the volume change of the Si-containing particle.

The graphite configuring the first graphite particle 12 and the second graphite particle 16 might be a natural graphite or an artificial graphite, or might be an amorphous carbon coated graphite having a form in which the graphite is coated with an amorphous carbon material.

A shape of the first graphite particle 12 is preferably a spheroidized. A circularity of the first graphite particle 12 is, from a perspective of a packing ability of the negative electrode active material, preferably 0.85 to 1, further preferably 0.88 to 1, or furthermore preferably 0.90 to 1.

Incidentally, the term "circularity" in the present description represents a ratio of a perimeter of a perfect circle whose area size is the same as a projected area size of a particle with respect to a perimeter of a particle projected image (in other words, the circularity = the perimeter of the perfect circle whose area size is the same as the projected area size/ the perimeter of the particle projected image). Thus, it means that, as the circularity is closer to 1, the particle projected image is closer to the perfect circle and the particle becomes closer to a perfect spherical shape. The circularity can be obtained, for example, by using a commercially available static automatic image analysis apparatus, obtaining the circularity of 100 or more particles, and calculating a mean value of them.

A mean particle diameter (D50) of the first graphite particle 12 and a mean particle diameter (D50) of the second graphite particle 16 are not particularly restricted. Each of the mean particle diameter (D50) of the first graphite particle 12 and the mean particle diameter (D50) of the second graphite particle 16 is, for example, 1 $\mu$m to 30 $\mu$m, preferably 5 $\mu$m to 25 $\mu$m, further preferably 10 $\mu$m to 23 $\mu$m, or furthermore preferably 12 $\mu$m to 20 $\mu$m.

Incidentally, in the present description, the term "mean particle diameter (D50)" represents a median diameter (D50), and represents a particle diameter corresponding to cumulative frequency 50 volume% from a side of a fine particle, whose particle diameter is smaller, with respect to a particle size distribution on a volume basis according to a laser diffraction and scattering method. The mean particle diameter (D50) can be obtained with a commercially available particle size distribution measuring device configured in a laser diffraction and scattering style, or the like.

As the first graphite particle 12 and the second graphite particle 16, the same graphite particles might be used or different graphite particles might be used. As the first graphite particle 12 and the second graphite particle 16, it is preferable to use the same graphite particles.

As the first Si-containing particle 14 and the second Si-containing particle 18, it is possible to use, for example, one in which a fine particle containing a Si is dispersed at an inside of the carbon material; one in which the fine particle containing the Si enters into a void of a granulated porous graphite; or the like. The Si-C composite material might be one in which the fine particle containing the Si adheres to a surface of the carbon particle; one in which the carbon fine particle adheres to the surface of the particle containing the Si, or the like. From a perspective of suppressing the volume change of the Si, it is preferable to use one in which the Si nanoparticle is dispersed at the inside of the carbon material, and one in which the Si nanoparticle is dispersed inside the void of the porous carbon material, or it is further preferable to used one in which the Si nanoparticle is dispersed inside the void of the porous carbon material.

As one example of the first Si-containing particle 14 and the second Si-containing particle 18, for example, it is possible to use a particle of the Si-C composite material. The Si-C composite material typically contains a carbon domain and a Si-containing domain. Incidentally, the first Si-containing particle 14 and the second Si-containing particle 18 might not be the Si-C composite material, or might be a Si particle, a Si oxide particle, or the like.

The carbon domain is, for example, a carbonide of a carbon precursor (for example, a petroleum pitch, a coal pitch, a phenolic resin, or the like); a graphite; or the like. The carbon domain suitably configures a carbon matrix. Thus, the Si-C composite material is suitably a material in which plural Si-containing domains are dispersed into a carbon matrix. In this case, the carbon matrix can relieve a volume change caused by expansion/contraction of the Si-containing domain, and thus it is advantageous.

The Si-containing domain contains the Si, and is configured with, for example, the Si, a Si oxide ($SiO_x$), a Si nitride ($SiN_x$), a Si carbide ($SiC_x$), or the like. The Si-containing domain is configured with preferably at least any of the Si and the Si oxide ($SiO_x$). The Si-containing domain might be a fine particle. An oxygen content amount of the Si-containing domain is preferably equal to or less than 10 mass%.

A mean particle diameter of the Si-containing domain is, for example, equal to or less than 50 nm, or might be 5 nm to 50 nm. Incidentally, said "mean particle diameter of the Si-containing domain" can be obtained as described below. At first, the negative electrode active material layer 64 is subjected to a FIB (a focused ion beam) processing, so as to manufacture a specimen for a scan transmission electron microscope (STEM) observation. Then, after this specimen is subjected to an element analysis by EDX elemental mapping, a BF image (a bright field image) and a HAADF image (a high angle annular dark field image) are obtained. From a contrast and a shape obtained with the BF image and the HAADF image, it is possible to obtain a diameter of the Si-containing domain. Diameters of arbitrary selected 10 or more Si-containing domains are obtained, and a mean value of them herein is treated as said "mean particle diameter of the Si-containing domain".

In the present description, a Si content rate (S1) in the first Si-containing particle 14 and a Si content rate (S2) in the second Si-containing particle 18 are not particularly restricted. However, if these Si content rates are too low, there is a fear that it is not implemented to make the secondary battery have the higher capacity. On the other hand, if these Si content rates are too high, when the electrical charge and the electrical discharge are repeated on the secondary battery, there is a fear that the volume change caused by the expansion/contraction of the first Si-containing particle 14 and the second Si-containing particle 18 becomes too large.

Thus, for example, in a situation where the first Si-containing particle 14 consisting of the Si-C composite material is used, the Si content rate (S1) in this particle is preferably 20 mass% to 55 mass%, or further preferably 25 mass% to 45 mass%. The Si content rate (S2) in the second Si-containing particle 18 is preferably 45 mass% to 80 mass%, or further preferably 55 mass% to 75 mass%.

Incidentally, the first Si-containing particle 14 and the second Si-containing particle 18 can be manufactured by a well known method. Incidentally, various manufacturing methods of the particle of the Si-C composite material are well known (see, for example, Japanese Patent Application Publication No. 2015-38862, International Patent Publication No. 2014/046144, prior art documents recited in these publications, or the like).

In the present description, the first Si-containing particle 14 and the second Si-containing particle 18 are defined by mean circularities D. For measuring the mean circularities D of the first Si-containing particle 14 and the second Si-containing particle 18, it is possible to use the same method as a measuring method of the above described mean circularity.

Particle diameters of the first Si-containing particle 14 and the second Si-containing particle 18 are not particularly restricted, but are measured by a method the same as a method for measuring the above described mean particle diameter (D50). The mean particle diameter (D50) is, for example, 1 $\mu$m to 20 $\mu$m, preferably 2 $\mu$m to 15 $\mu$m, further preferably 3 $\mu$m to 10 $\mu$m, or furthermore preferably 4 $\mu$m to 7 $\mu$m.

Incidentally, the negative electrode active material layer 64 might contain a component other than the negative electrode active material, and it is possible as an example of it to use a binder, an electrically conducting material, or the like. As the binder, for example, it is possible to use a styrene butadiene rubber (SBR), carboxymethyl cellulose (CMC), polyacrylic acid (PAA), polyvinylidene fluoride (PVDF), or the like. The CMC functions as a thickening agent, too. As an example of the electrically conducting material, it is possible to use a carbon black, such as acetylene black, a carbon fiber, a carbon nanotube (CNT), or the like, as the example of the electrically conducting material. Among them, the CNT is preferable. In a situation where the CNT is used as the electrically conducting material, the negative electrode active material layer 64 might contain a dispersing agent for the CNT.

(2) Suppressing negative electrode swell and rapid deterioration of secondary battery

When the electrical charge and the electrical discharge are performed on the secondary battery, the negative electrode active material near the negative electrode current collector significantly suffers an effect of the expansion of the negative electrode active material positioned closer to the surface side, and there is a tendency that the expansion is inhibited. Conversely speaking, the negative electrode active material positioned near the surface of the negative electrode active material layer does not have many factors by which the expansion is inhibited. In other words, regarding the negative electrode active material layer 64 in which the negative electrode active material layer is configured with a 2-layers structure, a portion whose swell is larger when the electrical charge and the electrical discharge are repeated on the secondary battery is the upper layer (in other words, the first layer 64a). Below, the mean circularity and the content amount of the Si-C containing particle (here, the Si-C composite material is used) in the first layer 64a and the second layer 64b and about thicknesses T of the first layer 64a and the second layer 64b are explained from a perspective of the negative electrode swell and the suppress in the rapid deterioration of the secondary battery.

(A) Mean circularity C

Regarding the negative electrode active material layer according to the present disclosure, on the upper layer, the first Si-containing particle 14 whose mean circularity is higher than the second Si-containing particle, in other words, the Si-containing particle being densely packed in the negative electrode active material layer is used. By doing this, on the upper layer where a deformation of the active material layer tends to be easily caused, the upper layer follows the expansion/contraction of the Si-containing particle in response to the electrical charge and discharge, so that a stress is relieved. Then, it is possible to implement making the secondary battery have the higher capacity and suppressing the swell of the negative electrode.

While, on the lower layer, the second Si-containing particle 18 whose mean circularity C is smaller than the first Si-containing particle, in other words, the Si-containing particle being sparsely packed in the negative electrode active material layer is used. By doing this, the particles become more hardly moving on the lower layer part where it is not easy for the deformation to be caused, and thus it is possible to suppress a disconnection of a conducting path at an electrical charge and discharge time. Thus, it is possible to suppress the swell of the negative electrode caused by the disconnection of the electrically conductive path (the swell or the like, caused by battery response becoming not-consistent so as to have a response or a stress being locally concentrated). As the above described results, on the whole of the negative electrode active material layer 64, it is possible to suppress the swell of the negative electrode 60 when the electrical charge and the electrical discharge are repeated on the secondary battery.

Further, on the lower layer, the sparsely packing ability of the negative electrode active material is maintained in the negative electrode active material layer even after the electrical charge and discharge is performed, and thus it is possible to additionally suppress the rapid deterioration of the secondary battery due to a liquid depletion.

The mean circularity C1 of the first Si-containing particle 14 is, from a perspective of implementing a densely packed condition in the negative electrode active material layer so as to make the secondary battery have the higher capacity, preferably equal to or more than 0.9, further preferably equal to or more than 0.93, or preferably in particular equal to or more than 0.95. Incidentally, an upper limit of the mean circularity C1 of the first Si-containing particle 14 is not particularly restricted, and might be, for example, equal to or less than 1.0, or might be equal to or less than 0.98.

The mean circularity C2 of the second Si-containing particle 18 is, from a perspective of implementing a sparsely packed condition in the negative electrode active material layer so as to suppress the rapid deterioration due to the liquid depletion, preferably less than 0.9, further preferably equal to or less than 0.87, or preferably in particular equal to or less than 0.83. Incidentally, in a situation where the mean circularity C2 of the second Si-containing particle 18 is too small, there is a fear that a packed amount becomes insufficient, and thus it is preferably equal to or more than 0.5, further preferably equal to or more than 0.6, or preferably in particular equal to or more than 0.7.

(B) Content amount

A content amount of the negative electrode active material in the first layer 64a (in other words, with respect to a total mass of the first layer 64a) is preferably equal to or more than 90 mass%, or further preferably equal to or more than 95 mass%. A content amount of the binder in the negative electrode active material layer is preferably equal to or more than 0.1 mass% and not more than 8 mass%, or further preferably equal to or more than 0.5 mass% and not more than 5 mass%. A content amount of the electrically conducting material in the negative electrode active material layer 64 is preferably equal to or more than 0.01 mass% and not more than 3 mass%, or further preferably equal to or more than 0.05 mass% and not more than 1 mass%.

A content amount of the negative electrode active material in the second layer 64b (in other words, with respect to a total mass of the second layer 64b) is preferably equal to or more than 90 mass%, or further preferably equal to or more than 95 mass%. A content amount of the binder in the negative electrode active material layer is preferably equal to or more than 0.1 mass% and not more than 8 mass%, or further preferably equal to or more than 0.5 mass% and not more than 5 mass%. A content amount of the electrically conducting material in the negative electrode active material layer 64 is preferably equal to or more than 0.01 mass% and not more than 3 mass%, or further preferably equal to or more than 0.05 mass% and not more than 1 mass%.

On the first layer 64a, a mass rate N1 of the first Si-containing particle 14 with respect to a total mass of the first graphite particle 12 and the first Si-containing particle 14 is, from a perspective of making the secondary battery have the higher capacity, preferably equal to or more than 10 mass%, or further preferably equal to or more than 15 mass%. On the other hand, from a perspective of suppressing the swell of the negative electrode plate, it is preferably equal to or less than 60 mass%, further preferably equal to or less than 40 mass%, or preferably in particular equal to or less than 20%.

On the second layer 64b, a mass rate N2 of the second Si-containing particle 18 with respect to a total mass of the second graphite particle 16 and the second Si-containing particle 18 is, from a perspective of making the secondary battery have the higher capacity, preferably equal to or more than 10 mass%, or further preferably equal to or more than 15 mass%. On the other hand, from a perspective of suppressing the swell of the negative electrode plate, it is preferably equal to or less than 60 mass%, further preferably equal to or less than 40 mass%, or preferably in particular equal to or less than 20%.

The negative electrode active material contained in the first layer 64a might be only the first graphite particle 12 and the first Si-containing particle 14. However, the first layer 64a might contain an additional negative electrode active material, other than the first graphite particle 12 and the first Si-containing particle 14, within a range where the effect of the present disclosure is not inhibited (for example, equal to or less than 10 mass% of a total amount of the negative electrode active material contained in the first layer 64a).

The negative electrode active material contained in the second layer 64b might be only the second graphite particle 16 and the second Si-containing particle 18. However, the second layer 64b might contain additional negative electrode active material, other than the second graphite particle 16 and the second Si-containing particle 18, within a range where the effect of the present disclosure is not inhibited (for example, equal to or less than 10 mass% of a total amount of the negative electrode active material contained in the second layer 64b).

(C) Thicknesses T of first layer and second layer

A ratio (T1 : T2) of the thickness T2 of the lower layer with respect to the thickness T1 of the upper layer is, in order to achieve both effects of suppressing the swell of the negative electrode plate and suppressing the rapid deterioration of the secondary battery due to the liquid depletion, preferably 10 : 90 to 90 : 10, further preferably 20 : 80 to 80 : 20, furthermore preferably 30 : 70 to 70 : 30, or preferably in particular 40 : 60 to 60 : 40.

Incidentally, as a difference between the thickness T1 of the upper layer and the thickness T2 of the lower layer is smaller, the effect according to the present disclosure can be further equally implemented on each of the upper layer and the lower layer, and thus the effect according to the present disclosure is further significantly implemented on the whole of the negative electrode active material layer.

(4) Manufacture of negative electrode

The negative electrode 60 can be suitably manufactured, for example, by a manufacturing method including a step for mixing the second graphite particle 16 and the second Si-containing particle 18 into a dispersion medium so as to prepare a paste for second layer formation (below, which might be referred to as "negative electrode composite material paste for lower layer", too); a step for mixing the first graphite particle 12 and the first Si-containing particle 14 into the dispersion medium so as to prepare a paste for first layer formation (below, which might be referred to as "negative electrode composite material paste for upper layer", too); a step for applying the paste for second layer formation to coat the negative electrode current collector 62 and drying it so as to form the second layer 64b (the lower layer) (below, which might be referred to as "lower layer forming step", too); a step for applying this paste for first layer formation to coat the second layer 64b and drying it so as to form the first layer 64a (the upper layer) (below, which might be referred to as "upper layer forming step", too); and a step for pressing the formed first layer 64a and second layer 64b (below, which might be referred to as "pressing step", too).

Incidentally, in the present description, the term "paste" represents a mixture in which a part or all of solid contents is dispersed into a dispersion medium, and semantically covers so-called "slurry", "ink", or the like.

The lower layer formation paste preparing step can be performed, according to a well known method, by mixing the second graphite particle 16, the second Si-containing particle 18, and an arbitrary component (for example, the binder, the electrically conducting material, or the like) with the dispersion medium (for example, water), as using a well known mixing device, stirring device, or the like.

The upper layer formation paste preparing step can be performed, according to a well known method, by mixing the first graphite particle 12, the first Si-containing particle 14, and the arbitrary component (for example, the binder, the electrically conducting material, or the like) with the dispersion medium (for example, water), as using the well known mixing device, stirring device, or the like. Incidentally, the upper layer formation paste preparing step might be performed in parallel to the lower layer formation paste preparing step. The upper layer formation paste preparing step might be performed in parallel to, or after the lower layer forming step.

The lower layer forming step can be performed according to a well known method. In particular, for example, it can be performed by applying the paste for lower layer formation to coat the negative electrode current collector 62 with a well known coating device, and then by drying it. By drying it, the lower layer (the second layer 64b) is formed.

The upper layer forming step can be performed according to a well known method. In particular, for example, it can be performed by applying the paste for upper layer formation to coat the formed lower layer with the well known coating device, and then by drying it. By drying it, the upper layer (the first layer 64a) is formed, so that the negative electrode active material layer 64 is formed.

Although a density of the negative electrode active material layer 64 is not particularly restricted, it is, for example, equal to or more than 0.7 g/cm$^3$, preferably equal to or more than 1.0 g/cm$^3$, or further preferably equal to or more than 1.2 g/cm$^3$. On the other hand, the density of the negative electrode active material layer 64 might be, for example, equal to or less than 2.3 g/cm$^3$, or might be equal to or less than 2.0 g/cm$^3$.

The pressing step can be performed on the basis of a well known method. In particular, by applying a pressure with a roller press, or the like, on the formed upper layer and lower layer (in other words, the negative electrode active material layer 64), the pressing step can be performed. By performing the pressing step, the negative electrode active material layer 64 is compressed to have a predetermined density, and by doing this, the negative electrode active material particle is densely packed.

2. Secondary battery

By the negative electrode 60 in accordance with the present embodiment, it is possible to suppress the swell of the negative electrode 60 when the electrical charge and the electrical discharge are repeated on the secondary battery and to suppress the rapid deterioration of the secondary battery. The negative electrode 60 in accordance with the present embodiment uses the negative electrode active material that contains the Si, and thus it is possible to make the secondary battery have the higher capacity.

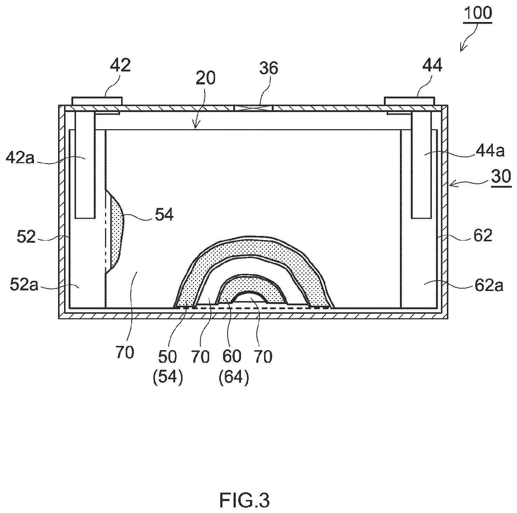

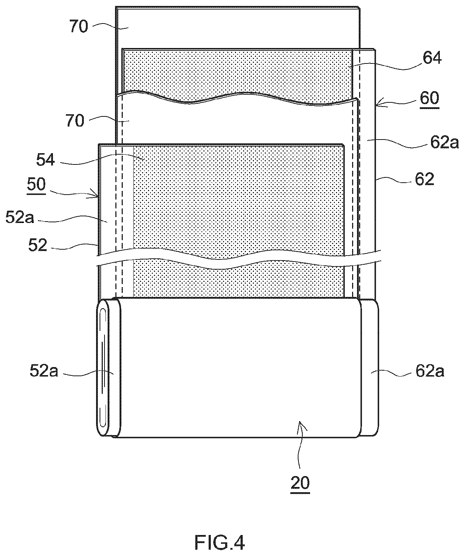

Then, from a different aspect, the herein disclosed secondary battery includes the positive electrode, the negative electrode, and an electrolyte. This negative electrode is the negative electrode 60 in accordance with the above described embodiment. Below, the lithium ion secondary battery is treated as an example, and then one embodiment of the herein disclosed secondary battery would be explained while referring to FIG. 3 and FIG. 4. A below described configuration example is a lithium ion secondary battery that is formed in a flat square shape and that includes a wound electrode assembly formed in a flat shape and includes a battery case formed in a flat shape.

FIG. 3 is a view that schematically shows a configuration of a lithium ion secondary battery constructed with the negative electrode in accordance with one embodiment. The lithium ion secondary battery 100 shown in FIG. 3 is the sealed type lithium ion secondary battery 100 constructed by accommodating the flat-shaped wound electrode assembly 20 and the nonaqueous electrolytic solution (not shown in drawings) in the battery case (in other words, the outer container) 30 formed in a flat square shape. The battery case 30 is provided with a positive electrode terminal 42 and a negative electrode terminal 44 which are for outside connection, and provided with a thin-walled safe valve 36 which is set to release an internal pressure of the battery case 30 when the internal pressure is increased to be equal to or more than a predetermined level. The battery case 30 is provided with an injection port (not shown in drawings) for injecting the nonaqueous electrolytic solution. The positive electrode terminal 42 is electrically connected to a positive electrode current collection plate 42a. The negative electrode terminal 44 is electrically connected to a negative electrode current collection plate 44a. As a material of the battery case 30, for example, it is possible to use a metal material, such as aluminum, being lightweight and having a good thermal conductivity.

FIG. 4 is a schematic exploded view that shows a configuration of a wound electrode assembly of the lithium ion secondary battery shown by FIG. 3. The wound electrode assembly 20 has a form, as shown by FIG. 3 and FIG. 4, in which a positive electrode sheet 50 and a negative electrode sheet 60 are stacked one on another via two long separator sheets 70 and then wound in a longitudinal direction. The positive electrode sheet 50 has a configuration in which a positive electrode active material layer 54 is formed on one surface or both surfaces (here, both surfaces) of a long positive electrode current collector 52 along the longitudinal direction. The negative electrode sheet 60 has a configuration in which the negative electrode active material layer 64 is formed on one surface or both surfaces (here, both surfaces) of the long negative electrode current collector 62 along the longitudinal direction. A positive electrode active material layer non-formation part 52a (in other words, a portion where the positive electrode active material layer 54 is not formed and the positive electrode current collector 52 is exposed) and the negative electrode active material layer non-formation part 62a (in other words, a portion where the negative electrode active material layer 64 is not formed and the negative electrode current collector 62 is exposed) are formed to protrude outwardly from both ends of the wound electrode assembly 20 in the winding axis direction (in other words, a sheet width direction orthogonal to the longitudinal direction). To the positive electrode active material layer non-formation part 52a and the negative electrode active material layer non-formation part 62a, the positive electrode current collection plate 42a and the negative electrode current collection plate 44a are respectively joined.

As the positive electrode current collector 52 configuring the positive electrode sheet 50, it is possible to use a well known positive electrode current collector that is used for the lithium ion secondary battery, and it is possible as an example of it to use a sheet or a foil which is made from a metal having the good electrically conductive property (for example, aluminum, nickel, titanium, stainless steel, or the like). As the positive electrode current collector 52, it is preferable to use the aluminum foil.

A size of the positive electrode current collector 52 is not particularly restricted, and can be decided suitably according to a battery design. In a situation where the aluminum foil is used as the positive electrode current collector 52, a thickness of it is not particularly restricted, but is, for example, equal to or more than 5 μm and not more than 35 μm, or preferably equal to or more than 7 μm and not more than 20 μm.

The positive electrode active material layer 54 contains a positive electrode active material. As the positive electrode active material, it is possible to use a positive electrode active material which is used for the lithium ion secondary battery and whose composition is well known. In particular, for example, it is possible as the positive electrode active material to use a lithium composite oxide, a lithium transition metal phosphate compound, or the like. The crystal structure of the positive electrode active material is not particularly restricted, but might be a layered structure, a spinel structure, an olivine structure, or the like.

Regarding the lithium composite oxide, it is preferable as a transition metal element to use a lithium transition metal complex oxide containing at least 1 kind among Ni, Co, and Mn, and it is possible as a specific example of it to use a lithium nickel base composite oxide, a lithium cobalt base composite oxide, a lithium manganese base composite oxide, a lithium nickel manganese base composite oxide, a lithium nickel cobalt manganese base composite oxide, a lithium nickel cobalt aluminum base composite oxide, a lithium iron nickel manganese base composite oxide, or the like.

Incidentally, the term "lithium nickel cobalt manganese base composite oxide" in the present description is a term semantically covering not only the oxide whose constituent element is Li, Ni, Co, Mn, or O, but also an oxide containing 1 kind, 2 kinds, or more kinds of additive elements other than them. As an example of the additive element described above, it is possible to use a transition metal element, such as Mg, Ca, Al, Ti, V, Cr, Y, Zr, Nb, Mo, Hf, Ta, W, Na, Fe, Zn, and Sn, a typical metal element, or the like. The additive element might be a semimetal element, such as B, C, Si, and P, or a non-metal element, such as S, F, Cl, Br, and I. This matter is similar even on the above described lithium nickel base composite oxide, lithium cobalt base composite oxide, lithium manganese base composite oxide, lithium nickel manganese base composite oxide, lithium nickel cobalt aluminum base composite oxide, lithium iron nickel manganese base composite oxide, or the like.

As the lithium transition metal phosphate compound, it is possible to use, for example, lithium iron phosphate ($LiFePO_4$), lithium manganese phosphate ($LiMnPO_4$), lithium manganese iron phosphate, or the like.

Regarding these positive electrode active materials, 1 kind might be used alone, or 2 or more kinds might be combined so as to be used. As the positive electrode active material, the lithium nickel cobalt manganese base composite oxide is especially preferable because it has superior characteristics, such as initial resistance characteristic.

The mean particle diameter (D50) of the positive electrode active material is not particularly restricted, but is, for example, equal to or more than 0.05 $\mu$m and not more than 25 $\mu$m, preferably equal to or more than 1 $\mu$m and not more than 20 $\mu$m, or further preferably equal to or more than 3 $\mu$m and not more than 15 $\mu$m.

The positive electrode active material layer 54 might contain a component other than the positive electrode active material, such as trilithium phosphate, electrically conducting material, and binder. As the electrically conducting material, it is possible to suitably use, for example, a carbon black, such as acetylene black (AB); a carbon fiber, such as vapor grown carbon fiber (VGCF) and carbon nanotube (CNT); or another carbon material (for example, a graphite, or the like). As the binder, it is possible to use, for example, polyvinylidene fluoride (PVdF), or the like.

A content amount of the positive electrode active material in the positive electrode active material layer 54 (in other words, a content amount of the positive electrode active material with respect to a total mass of the positive electrode active material layer 54) is not particularly restricted, but preferably equal to or more than 70 mass%, further preferably equal to or more than 80 mass%, or furthermore preferably equal to or more than 85 mass% and not more than 99 mass%. The content amount of the trilithium phosphate in the positive electrode active material layer 54 is not particularly restricted, but is preferably equal to or more than 0.1 mass% and not more than 15 mass%, or further preferably equal to or more than 0.2 mass% and not more than 10 mass%. The content amount of the electrically conducting material in the positive electrode active material layer 54 is not particularly restricted, but preferably equal to or more than 0.1 mass% and not more than 20 mass%, or further preferably equal to or more than 0.3 mass% and not more than 15 mass%. A content amount of the binder in the positive electrode active material layer 54 is not particularly restricted, but preferably equal to or more than 0.4 mass% and not more than 15 mass%, or further preferably equal to or more than 0.5 mass% and not more than 10 mass%.

A thickness per one surface of the positive electrode active material layer 54 is not particularly restricted, but is normally equal to or more than 10 $\mu$m, or preferably equal to or more than 20 $\mu$m. On the other hand, this thickness is normally equal to or less than 400 $\mu$m, or preferably equal to or less than 300 $\mu$m.

As the negative electrode sheet 60, the above described negative electrode 60 is used.

As the separator 70, it is possible to use, for example, a porous sheet (film) configured with a resin, such as polyethylene (PE), polypropylene (PP), polyester, cellulose, and polyamide. The porous sheet described above might have a single layer structure, or might have two or more layers laminate structure (for example, a three layers structure in which PP layers are laminated on both surfaces of a PE layer). On a surface of the separator 70, a heat resistance layer (HRL) might be provided.

A thickness of the separator 70 is not particularly restricted, but is, for example, equal to or more than 5 $\mu$m and not more than 50 $\mu$m, or preferably equal to or more than 10 $\mu$m and not more than 30 $\mu$m. An air permeability of the separator 70 obtained by Gurley test is not particularly restricted, but is preferably equal to or less than 350 second/100cc.

The nonaqueous electrolytic solution contains, typically, a nonaqueous solvent and a supporting salt (an electrolyte salt). As the nonaqueous solvent, it is possible without particular restriction to use an organic solvent, such as carbonates, ethers, esters, nitriles, sulfones, and lactones, which can be used for the electrolytic solution of a general lithium ion secondary battery. Among them, the carbonates are preferable, and it is possible as a specific example of them to use ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluoro dimethyl carbonate (TFDMC), or the like. Regarding the nonaqueous solvents as described above, it is possible to use 1 kind alone or to combine 2 or more kinds so as to use the resultant. As one example, the nonaqueous solvent consists of only the carbonates. As another example, the nonaqueous solvent contains the carbonates and the esters, such as methyl acetate.

As the supporting salt, it is possible to suitably use, for example, a lithium salt, such as $LiPF_6$, $LiBF_4$, and lithium bis(fluorosulfonyl)imide (LiFSI) (preferably, the $LiPF_6$). A concentration of the supporting salt is preferably equal to or more than 0.7 mol/L and not more than 1.3 mol/L.

Incidentally, the above described nonaqueous electrolytic solution might contain a component other than the above described components, insofar as the effect of the present disclosure is not significantly spoiled, and thus might contains, for example, various additive agents which might be a coating layer forming agent, such as vinylene carbonate (VC) and oxalate complex; a gas generating agent, such as biphenyl (BP) and cyclohexylbenzene (CHB); a thickening agent; or the like.

The lithium ion secondary battery 100, in which the swell of the negative electrode when the electrical charge and the electrical discharge are repeated is suppressed, is a low reaction force. In addition, the lithium ion secondary battery 100 has the higher capacity. The lithium ion secondary battery 100 can be used for various purposes. As a suitable usage, it is possible to apply it for a driving power supply mounted on a vehicle, such as battery electric vehicle (BEV), hybrid electric vehicle (HEV), and plug-in hybrid electric vehicle (PHEV). The lithium ion secondary battery 100 can be used as a storage battery, such as small electric power storage device. The lithium ion secondary battery 100 can be used, typically, in a form of a battery pack in which plural ones are connected in series and/or in parallel.

Above, as one example, the square-shaped lithium ion secondary battery 100 including the flat-shaped wound electrode assembly 20 has been explained. However, the lithium ion secondary battery can be configured to be a lithium ion secondary battery including a laminate type electrode assembly (in other words, an electrode assembly in which plural positive electrodes and plural negative electrodes are alternately laminated), too. In addition, the lithium ion secondary battery can be configured to be a cylindrical-shaped lithium ion secondary battery, a laminate case type lithium ion secondary battery, or the like.

In addition, according to a well known method, the lithium ion secondary battery 100 can be configured to be an all-solid state lithium ion secondary battery in which a solid electrolyte is used instead of the nonaqueous electrolyte.

In addition, the negative electrode 60 in accordance with the present embodiment is suitable for the negative electrode of the lithium ion secondary battery, but can be constructed for the negative electrode of the other secondary battery so as to be used, and the other secondary battery can be configured according to a well known method.

<<Evaluation>>

1. Test example

Below, a test example related to the herein disclosed technique is explained, but it is not intended that the herein disclosed technique is restricted to the test example described above.

(1) Practical example 1

Manufacture of negative electrode

A second graphite particle C (mean circularity: 0.9) and a second Si-containing particle (mean circularity C2 : 0.8, mean particle diameter M2: 7 $\mu$m) as the negative electrode active materials, a SWCNT as the electrically conducting material, and a CMC, a PAA, and a SBR as the binder, were weighed so as to make a mass ratio satisfy C : second Si-containing particle : SWCNT : CMC : PAA : SBR = 85 : 15 : 0.1 : 1 : 1 : 1.5. Among them, raw materials other than the SWCNT and the SBR were dry-mixed, then the SWCNT and the dispersion medium were mixed and were subjected to hard kneading, and then the SBR and the dispersion medium were put into and then were diluted and mixed, so that the negative electrode composite material paste for lower layer was manufactured. Incidentally, the hard kneading is required to make a pressure load onto the paste be optimized in order to cover an active material periphery with the binder (CMC/PAA). In order to make this pressure load be optimized, an ideal solid content ratio $B_0$ of the paste was derived by the below described Formula (1). Incidentally, the ideal solid content ratio $B_0$ of a paste is a value depending on a hard kneading condition (for example, a shape or a rotation number of an impeller, or the like).

$$B_0 = 100 - A_0 = 100/(100 + A_1) \times 100 \quad \text{Formula (1)}$$

$B_0$: Ideal solid content ratio [%]
$A_0$: Moisture rate at which a torque required for mixing becomes maximum [%]
$A_1$: Moisture amount when a mixture is set to be 100 g [mL]

Next, by the same manufacturing method, other than using the first Si-containing particle (mean circularity C1: 0.95, particle diameter M1: 7 μm) instead of the second Si-containing particle, the negative electrode composite material paste for upper layer was manufactured.

Then, the negative electrode composite material paste for lower layer was applied to coat the negative electrode substrate (the copper foil, 10 μm), and then it was dried. By applying the negative electrode composite material paste for upper layer to coat the negative electrode composite material paste for lower layer after the dry and then drying it so as to make the ratio T1 : T2 of the upper layer thickness T1 and the lower layer thickness T2 become 50 : 50, the negative electrode active material layer configured with the 2-layers structure was provided on the negative electrode substrate. After that, by performing a pressing process to roll and to process so as to have a predetermined size, the negative electrode plate was obtained.

Manufacture of positive electrode

The lithium-nickel-cobalt-manganese base composite oxide (NCM) as the positive electrode active material, the polyvinylidene fluoride (PVdF) as the binder, and the acetylene black (AB) as the electrically conducting material were weighed to make the mass ratio satisfy NCM : PVdF : AB = 100 : 1 : 1, and were mixed in the N-methyl-2-pyrrolidone (NMP), so that the positive electrode composite material paste was prepared. This positive electrode composite material paste was applied to coat a positive electrode substrate (aluminum foil, thickness was 15 μm) formed in a long strip-like shape, and then it was dried. After that, by performing a pressing process to roll and to process so as to have a predetermined size, the positive electrode plate was obtained.

To each of the negative electrode and the positive electrode, a lead was attached, and then each electrode was laminated via the separator, so that the electrode assembly was manufactured. The manufactured electrode assembly was inserted into an outer case configured with an aluminum laminate sheet, the nonaqueous electrolyte was injected, and then an opening part of the outer case was sealed, so that a test cell (a laminate cell) was manufactured.

As the nonaqueous electrolytic solution, a solution was used in which the LiPF6 was dissolved at a concentration being 1 M into a mixed solvent containing the ethylene carbonate (EC), the fluoro ethylene carbonate (FEC), the ethyl methyl carbonate (EMC), and the dimethyl carbonate (DMC) at a volume ratio being EC : FEC : EMC : DMC = 15 : 5 : 40 : 40.

(2) Practical example 2

The test cell was manufactured similarly to Practical example 1, other than making the mean circularity of the first Si-containing particle be 0.9 and making the mean circularity of the second Si-containing particle be 0.85.

(3) Practical example 3

The test cell was manufactured similarly to Practical example 1, other than making the thickness ratio T1 : T2 of the upper layer and the lower layer be 90 : 10.

(4) Practical example 4

The test cell was manufactured similarly to Practical example 1, other than making the thickness ratio T1 : T2 of the upper layer and the lower layer be 10 : 90.

(5) Practical example 5

The test cell was manufactured similarly to Practical example 1, other than making the thickness ratio T1 : T2 of the upper layer and the lower layer be 70 : 30.

(6) Practical example 6

The test cell was manufactured similarly to Practical example 1, other than making the thickness ratio T1 : T2 of the upper layer and the lower layer be 30 : 70.

(7) Practical example 7

The test cell was manufactured similarly to Practical example 1, other than making the mean circularity of the second Si-containing particle be 0.5.

(8) Comparative example 1

The test cell was manufactured similarly to Practical example 1, other than making the negative electrode active material layer be configured with a single layer containing the first Si-containing particle and the second Si-containing particle. Incidentally, a composition of the composite material paste forming the negative electrode active material layer is adjusted to make the mass ratio satisfy C : second Si-containing particle : first Si-containing particle : SWCNT : CMC : PAA : SBR = 85 : 7.5 : 7.5 : 0.1 : 1 : 1 : 1.5.

(9) Comparative example 2

The test cell was manufactured similarly to Practical example 1, other than forming the lower layer with the paste containing the first Si-containing particle and forming the upper layer with the paste containing the second Si-containing particle.

(10) Comparative example 3

The test cell was manufactured similarly to Practical example 1, other than using the paste containing only the first Si-containing particle so as to make the negative electrode active material layer be configured with a single layer.

(11) Comparative example 4

The test cell was manufactured similarly to Practical example 1, other than using the paste containing only the second Si-containing particle so as to make the negative electrode active material layer be configured with the single layer.

(12) Comparative example 5

The test cell was manufactured similarly to Practical example 1, other than making the mean circularity of the second Si-containing particle be 0.4.

2. Evaluation test

(1) Measurement of mean circularities of first Si-containing particle and second Si-containing particle

The mean circularity of the present description is derived by an image-based particle size distribution measuring device. While a powder of the Si-containing particle is used as a sample, a length ($L_0$) of a circumference of a circle whose area size is similar to a projected image of an arbitrary Si-containing particle and a length (L) of an outer periphery of this projected image were measured, and then it was derived by Formula (2) described below. Then, from 3000 Si-containing particles, the mean circularity of the Si-containing particles was derived.

$$\text{Mean circularity } C = L_0/L \quad \text{Formula (2)}$$

(2) Negative electrode plate expansion rate evaluation

The test cell was manufactured, and then the electrical charge and discharge was repeatedly performed to satisfy 250 cycles while the CCCV electrical charge (0.4 C _ 4.2 V _ 0.1 C cut) - CC electrical discharge (0.4 C _ 2.5 V cut) under the 25°C environment was treated as 1 cycle. Then, with the below described Formula (3), a negative electrode plate expansion rate was derived.

Negative electrode plate expansion rate = {(Thickness of test cell after 250 cycles/ Thickness of test cell before 250 cycles) - 1} $\times$ 100     Formula (3)

(3) Resistance increasing rate evaluation

On the test cell, the CCCV electrical charge (1.5 C _ 4.2 V _ 0.1 C cut) was performed under 25°C environment by a constant current being 1.5 C till a SOC reached 50%. After that, it was kept under 25°C environment for 1 hour, and then a CC electrical discharge (0.4 C _ 2.5 V cut) was performed by the constant current being 1.0 C for 10 seconds. A resistance value at that time was defined as an initial resistance.

After the above described measurement of the initial resistance, the electrical charge and discharge cycle was repeated to reach 50 cycles, in which a set of the CCCV electrical charge (1.5 C _ 4.2 V _ 0.1 C cut) and the CC electrical discharge (0.4C _ 2.5 V cut) under 25°C environment was treated as 1 cycle. A resistance evaluation was performed on the test cell after 50 cycles under 25°C environment, so that a resistance increasing rate was derived by Formula (4) described below. In the present description, by performing the evaluation for the resistance increasing rate, the rapid deterioration of the secondary battery due to the electrical charge and discharge was evaluated.

$$\text{Resistance increasing rate} = \text{Resistance value after 50 cycles} / \text{Initial resistance} \times 100$$

Formula (4)

3. Evaluation result

The test results of each sample are summarized on Table 1 and Table 2.

[Table 1]

Table 1

| | Negative electrode active material layer | Mean circularity C1 of first Si-containing particle | Mean circularity C2 of second Si-containing particle | Mean circularity D1 of first graphite particle | Mean circularity D2 of second graphite particle | Thickness T1 of upper layer [μm] | Thickness T2 of lower layer [μm] | Upper layer : Lower layer T1 : T2 |
|---|---|---|---|---|---|---|---|---|
| Practical example 1 | 2 layers | 0.95 | 0.8 | 0.9 | 0.9 | 30 | 30 | 50:50 |
| Practical example 2 | 2 layers | 0.9 | 0.85 | 0.9 | 0.9 | 30 | 30 | 50:50 |
| Practical example 3 | 2 layers | 0.95 | 0.8 | 0.9 | 0.9 | 54 | 6 | 90:10 |
| Practical example 4 | 2 layers | 0.95 | 0.8 | 0.9 | 0.9 | 6 | 54 | 10:90 |
| Practical example 5 | 2 layers | 0.95 | 0.8 | 0.9 | 0.9 | 42 | 18 | 70:30 |
| Practical example 6 | 2 layers | 0.95 | 0.8 | 0.9 | 0.9 | 18 | 42 | 30:70 |
| Practical example 7 | 2 layers | 0.95 | 0.5 | 0.9 | 0.9 | 30 | 30 | 50:50 |
| Comparative example 1 | Single layer | 0.95 | 0.8 | 0.9 | 0.9 | - | - | - |
| Comparative example 2 | 2 layers | 0.95 | 0.8 | 0.9 | 0.9 | 30 | 30 | 50:50 |
| Comparative example 3 | Single layer | 0.95 | - | 0.9 | - | - | - | - |

(continued)

| | Negative electrode active material layer | Mean circularity C1 of first Si-containing particle | Mean circularity C2 of second Si-containing particle | Mean circularity D1 of first graphite particle | Mean circularity D2 of second graphite particle | Thickness T1 of upper layer [μm] | Thickness T2 of lower layer [μm] | Upper layer : Lower layer T1 : T2 |
|---|---|---|---|---|---|---|---|---|
| Comparative example 4 | Single layer | - | 0.8 | - | 0.9 | - | - | - |
| Comparative example 5 | 2 layers | 0.95 | 0.4 | 0.9 | 0.9 | 30 | 30 | 50:50 |

[Table 2]

Table 2

| | Negative electrode plate expansion rate [%] | High rate cycle characteristic (the resistance increasing rate) [%] |
|---|---|---|
| Practical example 1 | 29 | 106 |
| Practical example 2 | 32 | 107 |
| Practical example 3 | 38 | 109 |
| Practical example 4 | 40 | 105 |
| Practical example 5 | 34 | 108 |
| Practical example 6 | 35 | 107 |
| Practical example 7 | 33 | 111 |
| Comparative example 1 | 52 | 109 |
| Comparative example 2 | 58 | 107 |
| Comparative example 3 | 60 | 106 |
| Comparative example 4 | 59 | 115 |
| Comparative example 5 | 35 | 114 |

Regarding Practical examples 1 to 7, the negative electrode active material layer was configured with the 2-layers structure and included an aspect in which the negative electrode active material at the upper layer side was densely packed and the negative electrode active material at the lower layer side was sparsely packed, and thus it was confirmed that the negative electrode plate expansion rate and a high rate cycle characteristic (the resistance increasing rate) were comparatively lower.

Regarding any of Comparative examples 1 to 5, an aspect of the negative electrode active material layer was outside a range of a technical idea according to the present disclosure, it was confirmed that suppressing both of the negative electrode swell and the rapid deterioration of the secondary battery could not be achieved.

From the results described above, it was confirmed that, in order to suppress the negative electrode swell and the rapid deterioration of the secondary battery, making the negative electrode active material layer be configured with two layers, arranging the negative electrode active material, whose circularity was higher, at the upper layer side, and arranging the negative electrode active material, whose circularity was lower, on the lower layer were required.

As described above, the present description contains the disclosure recited by each item described below.

Item 1:

A negative electrode for a secondary battery, comprising:

a negative electrode current collector; and
a negative electrode active material layer that is supported by the negative electrode current collector, wherein

the negative electrode active material layer comprises a lower layer positioned at a side of the negative electrode current collector and an upper layer positioned at a surface side,
the upper layer comprises a first graphite particle and a first Si-containing particle, as a negative electrode active material,
the lower layer comprises a second graphite particle and a second Si-containing particle, as the negative electrode active material, and
a mean circularity C1 of the first Si-containing particle is larger than a mean circularity C2 of the second Si-containing particle.

Item 2: The negative electrode recited in Item 1, wherein
the C1 is equal to or more than 0.9 and not more than 1.0 and the C2 is equal to or more than 0.5 and less than 0.9.
Item 3: The negative electrode recited in Item 1 or 2, wherein
a mean circularity D1 of the first graphite particle is equal to or more than 0.85 and not more than 1.0.
Item 4: The negative electrode recited in any one of Items 1 to 3, wherein
a ratio T1 : T2 of a thickness T1 of the upper layer and a thickness T2 of the lower layer is 10 : 90 to 90 : 10.
Item 5: The negative electrode recited in any one of Items 1 to 4, wherein

a mass rate N1 of the first Si-containing particle with respect to a total mass of the first graphite particle and the first Si-containing particle on the upper layer is 10 to 60 mass%, and
a mass rate N2 of the second Si-containing particle with respect to a total mass of the second graphite particle and the second Si-containing particle on the lower layer is 10 to 60 mass%.

Item 6: A secondary battery, comprising: a positive electrode; a negative electrode; and an electrolyte, wherein the negative electrode is the negative electrode recited in any one of Items 1 to 5.

[Reference Signs List]

12   First graphite particle
14   First Si-containing particle
16   Second graphite particle
18   Second Si-containing particle
20   Wound electrode assembly
30   Battery case
36   Safe valve
42   Positive electrode terminal
42a   Positive electrode current collection plate
44   Negative electrode terminal
44a   Negative electrode current collection plate
50   Positive electrode sheet (positive electrode)
52   Positive electrode current collector
52a   Positive electrode active material layer non-formation part
54   Positive electrode active material layer
60   Negative electrode sheet (negative electrode)
62   Negative electrode current collector
62a   Negative electrode active material layer non-formation part
64   Negative electrode active material layer
70   Separator sheet (separator)
100   Lithium ion secondary battery

**Claims**

1.   A negative electrode (60) for a secondary battery (100), comprising:

a negative electrode current collector (62); and
a negative electrode active material layer (64) that is supported by the negative electrode current collector (62), wherein

the negative electrode active material layer (64) comprises a lower layer (64a) positioned at a side of the negative electrode current collector (62) and an upper layer (64b) positioned at a surface side,
the upper layer (64b) comprises a first graphite particle (12) and a first Si-containing particle (14) , as a negative electrode active material,
the lower layer (64a) comprises a second graphite particle (16) and a second Si-containing particle (18), as the negative electrode active material, and
a mean circularity C1 of the first Si-containing particle (14) is larger than a mean circularity C2 of the second Si-containing particle (18).

2. The negative electrode (60) according to claim 1, wherein
the C1 is equal to or more than 0.9 and not more than 1.0 and the C2 is equal to or more than 0.5 and less than 0.9.

3. The negative electrode (60) according to claim 1 or 2, wherein
a mean circularity D1 of the first graphite particle (12) is equal to or more than 0.85 and not more than 1.0.

4. The negative electrode (60) according to any one claims 1 or 3, wherein
a ratio T1 : T2 of a thickness T1 of the upper layer (64b) and a thickness T2 of the lower layer (64a) is 10 : 90 to 90 : 10.

5. The negative electrode (60) according to any one claims 1 or 4, wherein

a mass rate N1 of the first Si-containing particle (14) with respect to a total mass of the first graphite particle (12) and the first Si-containing particle (14) on the upper layer (64b) is 10 to 60 mass%, and
a mass rate N2 of the second Si-containing particle (18) with respect to a total mass of the second graphite (16) particle and the second Si-containing particle (18) on the lower layer (64a) is 10 to 60 mass%.

6. A secondary battery, comprising: a positive electrode (50); a negative electrode (60); and an electrolyte, wherein
the negative electrode (60) is the negative electrode according to any one of claims 1 or 5.

FIG.1

FIG.2

FIG.3

FIG.4

Europäisches
Patentamt
European
Patent Office
Office européen
des brevets

# EUROPEAN SEARCH REPORT

**Application Number**

EP 25 19 9567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/145428 A1 (PANASONIC IP MAN CO LTD [JP]) 3 August 2023 (2023-08-03) <br> * see document EP 4 471 890 A1 * <br> & EP 4 471 890 A1 (PANASONIC IP MAN CO LTD [JP]) 4 December 2024 (2024-12-04) <br> * paragraphs [0004] - [0011], [0026] - [0032], [0041], [0065] - [0067]; claims 1-6; figure 2 * | 1-6 | INV. <br> H01M4/133 <br> H01M4/134 <br> H01M4/36 <br> H01M4/587 <br> H01M4/62 <br> H01M10/0525 |
| Y | EP 4 411 884 A1 (PANASONIC IP MAN CO LTD [JP]) 7 August 2024 (2024-08-07) <br> * paragraphs [0020] - [0022]; claims 1-15 * | 1-6 | |

-----

-----

**TECHNICAL FIELDS SEARCHED (IPC)**

H01M

The present search report has been drawn up for all claims

| Place of search | Date of completion of the search | Examiner |
|---|---|---|
| Munich | 13 February 2026 | Szekely, Noemi Kinga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 9567

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | | Publication date | Patent family member(s) | | Publication date |
|---|---|---|---|---|---|
| WO 2023145428 | A1 | 03-08-2023 | CN | 118575298 A | 30-08-2024 |
| | | | EP | 4471890 A1 | 04-12-2024 |
| | | | JP | WO2023145428 A1 | 03-08-2023 |
| | | | US | 2025105288 A1 | 27-03-2025 |
| | | | WO | 2023145428 A1 | 03-08-2023 |
| EP 4411884 | A1 | 07-08-2024 | CN | 118104008 A | 28-05-2024 |
| | | | EP | 4411884 A1 | 07-08-2024 |
| | | | JP | WO2023053947 A1 | 06-04-2023 |
| | | | US | 2024396019 A1 | 28-11-2024 |
| | | | WO | 2023053947 A1 | 06-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019175851 A
- JP 2017092009 A
- JP 2015038862 A
- WO 2014046144 A